(19) Europäisches Patentamt
European Patent Office
Office européen des brevets

(11) Publication number: **0 095 530 B1**

(12) **EUROPEAN PATENT SPECIFICATION**

(45) Date of publication of patent specification: **22.04.87**

(21) Application number: **82200676.3**

(22) Date of filing: **01.06.82**

(51) Int. Cl.$^4$: **C 08 G 18/48,** C 08 G 18/40, C 08 G 18/14, C 08 G 18/76

(54) **Polyurethane and urethane-modified isocyanurate foams and a method for their preparation.**

(43) Date of publication of application:
**07.12.83 Bulletin 83/49**

(45) *Publication of the grant of the patent:*
**22.04.87 Bulletin 87/17**

(84) Designated Contracting States:
**AT BE CH DE FR GB IT LI NL SE**

(56) *References cited:*
**DE-A-2 607 380**
**FR-A-1 487 457**
**FR-A-1 599 727**
**US-A-3 857 800**
**US-A-3 922 238**
**US-A-3 940 517**
**US-A-3 943 075**

(73) Proprietor: **THE DOW CHEMICAL COMPANY**
**2030 Dow Center Abbott Road P.O. Box 1967**
**Midland, MI 48640 (US)**

(72) Inventor: **Kuhn, Ernst Friedrich**
**Dorfstrasse 60**
**CH-8037 Zürich (CH)**
Inventor: **Den Boer, Jelle**
**Im Staubenweidli 7**
**CH-8820 Wädenswil (CH)**
Inventor: **Thoen, Johan Arthur**
**Obere Leihofstrasse 21**
**CH-8820 Wädenswil (CH)**

(74) Representative: **Doeve, Johannes Hendrik Albert et al**
**Vereenigde Octrooibureaux Nieuwe Parklaan 107**
**NL-2587 BP 's-Gravenhage (NL)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

**EP 0 095 530 B1**

Courier Press, Leamington Spa, England.

**Description**

The present invention relates to isocyanate-derived foams, more particularly, to rigid urethane-modified, polyisocyanurate foams.

Due to their desirable physical properties such as dimensional stability, compressive strength, thermal conductivity and the like, isocyanate-derived foams are employed in a wide variety of applications including insulation, structural reinforcement and electrical encapsulation. In addition to the aforementioned properties, for use in various applications, the foams must also advantageously exhibit some degree of fire resistance.

A foam exhibiting comparatively excellent fire-resistant properties is obtained by the trimerization reaction of an isocyanate to form an isocyanurate. However, the resulting, unmodified polyisocyanurate foams are extremely friable (weak) materials which have a tendency to crumble or to be reduced to a powder. In addition, when subjected to elevated temperatures, the unmodified polyisocyanurate foams are liable to form cracks. These cracks form bridges across which occurs a break-down of the otherwise high insulating properties of the foam.

To reduce the friability of an unmodified polyisocyanurate foam, it has heretofore been common to employ relatively small amounts of an active hydrogen-containing compound per each equivalent of isocyanate to make a urethane-modified, isocyanurate foam. See, for example, U.S. Patent Nos. 3,940,517; 3,922,238 and 4,204,019. Unfortunately, elevated temperatures are often required to initiate the reaction of the isocyanate in the formation of the disclosed foams. This necessitates the energy consuming and otherwise undesirable step of heating the reaction mixtures prior to foam formation which often results in processing problems and/or non-uniformity in the resulting foam. In addition, a number of the known urethane-modified isocyanurate foams can only be prepared using a prepolymer of the reaction products of an isocyanate with a polyol as one of the reactants. Moreover, further increases in the strength of the foams are still required.

In view of the aforementioned deficiencies in the prior art, it remains highly desirable to provide an isocyanate-derived foam having desirable physical properties. Including fire-resistant properties, which foam can readily be prepared from a reaction mixture having desired processability characteristics.

Accordingly, in one aspect, the present invention is a method for preparing a rigid, urethane-modified, isocyanurate foam by mixing a polyisocyanate with at least two different hydrogen-containing compounds in the presence of a blowing agent, catalyst and a foam stabilizing surfactant characterized in that the polyisocyanate component comprises one or more polymethylene polyphenylisocyanates each having a functionality from 2.1 to 3.2 and an isocyanate equivalent weight of from 120 to 180, with at least two active hydrogen containing compounds, one of the hydrogen containing compounds is an alkylene oxide polymer having a hydroxyl number from 20 to 200 and from 2 to 8 active hydrogens, said alkylene oxide polymers being composed of at least 10 weight percent, based on the total weight of polymerized alkylene oxide in the polymer, of polymerized ethylene oxide and the second of said active hydrogen-containing compounds is a polyether polyol, a hydroxy terminated polyester, a graft polyol, a hydroxy terminated polyacetal or a mixture thereof.

In another aspect, the present invention is a rigid, urethane modified isocyanurate foam comprising the reaction product of a polyisocyanate component and at least two active hydrogen containing compounds characterized in that the polyisocyanate component comprises one or more polymethylene polyphenylisocyanate each having a functionality from 2.1 to 3.2 and an isocyanate equivalent weight of from 120 to 180, one of the hydrogen containing compounds in an alkylene oxide polymer having a hydroxyl number from 20 to 200 and from 2 to 8 active hydrogens, said alkylene oxide polymer being composed of at least 10 weight percent, based on the total weight of the polymerized alkylene oxide in the polymer, of polymerized ethylene oxide and the second of said active hydrogen-containing compounds is a polyether polyol, a hydroxy, terminated polyester, a graft polyol, a hydroxy terminated polyacetal or a mixture thereof.

For the preparation of such rigid urethane modified isocyanurate foam a precursor composition is used comprising at least two different active hydrogen containing compounds wherein one of the active hydrogen containing compounds is an alkylene oxide polymer having a hydroxyl number from 20 to 200, from 2 to 8 active hydrogens and being composed of at least 10 weight percent, based on the total weight of the polymerized alkylene oxide in the polymer, of polymerized ethylene oxide and the second active hydrogen containing compound is a polyether polyol, a hydroxy terminated polyester, a graft polyol, a hydroxy terminated polyacetal or a mixture thereof. Hereinafter, this precursor composition will be referred to as a "polyhydric precursor".

Isocyanate-derived foams of excellent properties can be prepared using the described combination of an active hydrogen-containing compound and the ethoxylated, high-molecular weight, alkylene oxide polymer. By varying the relative concentration of the described active hydrogen-containing compounds and the type of polymerization catalyst employed, urethane-modified polyisocyanurate foams can be prepared from said polyhydric precursor, with the precursor being particularly useful in the preparation of urethane-modified, isocyanurate foams. The urethane-modified, polyisocyanurate foams prepared using the described polyhydric precursor exhibit unexpectedly superior compressive strengths and surprisingly good fire-resistant properties without the excessive brittleness or friability often exhibited by many

urethane-modified isocyanurate foams. This is due to the relatively high amounts of urethane linkages which can be introduced into the foams of the present invention without a significant and expected loss in fire resistant properties. As used herein, the term "fire resistant" properties is used for comparative purposes only and is not used or to be implied to project the actual performance of a foam in an actual fire situation. As the foams are composed of organic materials, they will burn if exposed to sufficient heat and oxygen.

The rigid urethane-modified polyisocyanurate foams of the present invention can be employed in a wide variety of applications including thermal insulation and/or structural reinforcement in housing, refrigerators, freezers and the like, and electrical encapsulation.

The isocyanate derived foams of the present invention are prepared using at least two active hydrogen-containing components, at least one of which components is an alkylene oxide polymer containing significant amounts of polymerized ethylene oxide. As used herein, the term "active hydrogen-containing component" refers to a compound containing at least two active hydrogen-containing groups each of which is capable of reacting with an isocyanato group. For the purposes of the present invention, such active hydrogen-containing compounds are compounds containing at least two active hydrogens as determined by the well known Zerewitinoff test such as described by Kohler in Journal of the American Chemical Society, 49, 3181 (1927). Representative active hydrogen-containing groups as determined by the Zerewitinoff method are —OH, —NH—, —COOH and —SH. In general, the active hydrogen-containing compounds advantageously employed herein will contain two or more —OH groups, two or more —SH groups or at least one —OH group and at least one —SH or —NH— group.

At least one of the active hydrogen-containing components used herein is an alkylene oxide polymer containing at least two active hydrogens reactive with an isocyanate, said alkylene oxide polymer having an equivalent weight of at least 300 and being composed of at least 10 weight percent, based on the total weight of the polymerized alkylene oxide in the polymer, of polymerized ethylene oxide. For the purposes of this invention, the "equivalent weight" is the molecular weight of the alkylene oxide polymer, including the residue of any initiator employed in its preparation, divided by the number of equivalents per each molecule. The number of equivalents refers to the number of active hydrogen-containing groups capable of reacting with an isocyanate per molecule of the ethoxylated alkylene oxide. In general, the number of active hydrogen groups in the ethoxylated, alkylene oxide polymer will vary from 2 to 8, with from 2 to 4 active hydrogen-containing groups more generally being employed.

Although the ethoxylated alkylene oxide polymer most advantageously employed herein will vary depending on a variety of factors including the other components employed in preparing the isocyanate derived foam, particularly the other active hydrogen compound(s), and the desired properties of the resulting foam, the polymer advantageously has an equivalent weight of at least 500, more preferably at least 700 and comprises at least 30, more advantageously at least 50, weight percent, based on the total weight of the polymerized alkylene oxide, of polymerized ethylene oxide mers, preferably randomly distributed throughout the polymer chain. The OH number (which is defined as the milligrams of potassium hydroxide equivalent to the number of OH groups per gram of an active hydrogen-containing compound) of the ethoxylated alkylene oxide polymer is from 20 to 200, preferably from 20 to 110, more preferably from 20 to 80.

Preferred ethoxylated alkylene oxide polymers can be represented by the general structural formula:

$$X\text{-}[\text{-}(\text{-}C_2H_4O\text{-})_x\text{-}(\text{-}\underset{\substack{|\\R_1}}{CH_2CH}\ O\text{-})_y\text{-}]_b\text{-}(\text{-}\underset{\substack{|\\R_2}}{CH_2CH}\text{—}W\text{-})_z H$$

wherein X is the residue of an organic active hydrogen initiator, x is the summation of the ethylene oxide mers, distributed randomly and/or as a block through the alkylene oxide polymer chain; y is the summation of the propylene, butylene and/or pentylene (amylene) oxide mers, distributed randomly and/or as a block through the alkylene oxide polymer chain; $x/(x+y)$ is at least 0.1; $y/(x+y)$ is less than 0.9; $R_1=CH_3$, $C_2H_5$ or $C_3H_7$; $R_2=H$, $CH_3$, $C_2H_5$ or $C_3H_7$; b is from 2 to 8; W=O, S or NH and x, y, b and z are such that the equivalent weight of the polymer is from 300 to 2500.

Organic active hydrogen initiators useful in the preparation of the ethoxylated alkylene oxide polymer are any of those compounds which are capable of initiating the polymerization of an alkylene oxide.

In general, the organic active hydrogen initiators are compounds containing two or more hydroxy, amine, thiol or carboxyl groups or a mixture of one more hydroxy and one or more amine, thiol or carboxyl group. Representative of such compounds are the mono- and di-saccharides such as sucrose; water; the polyhydric alkyl alcohols (wherein the term "polyhydric" refers to a compound containing two or more active hydrogen-containing groups) and halogenated polyhydric alkyl alcohols such as 2-methyl-propane-1,3-diol, trimethylol propane, trimethylol ethane, the glycols (e.g., ethylene glycol, 1,2-propylene glycol, 1,3-propylene glycol, 1,4-propylene glycol; 1,4-butylene glycol, 2,3-butylene glycol, 1,6-hexane diol, 1,8-octane diol), hydroxy, amino or the hydroxy-terminated polyalkylene polyethers such as the reaction products of ethylene glycol (e.g., diethylene glycol, triethylene glycol, tetraethylene glycol and higher polyethylene glycols); propylene glycol (e.g., dipropylen glycol and higher polypropylene glycols); butylene glycol (e.g., dibutylene glycol and higher polybutylene glycols); glycerol, pentaerythriol,

1,2,6-hexane triol, 1,2,4-butane triol, sorbitol; polyhydric cycloalkyl alcohols such as cyclohexane diol, and cyclohexane dimethanol (1,4-bis-hydroxymethylcyclohexane); the polyhydric aromatic alcohols and halogenated, polyhydric aromatic alcohols such as hydroquinone and other derivatives of phenol, e.g., 2,2-bis (4-hydroxy phenyl) propane commonly known as bisphenol A and its halogenated derivatives such as 2,2-bis (4-hydroxyl-3,5-dibromo phenyl) polyhydric alkyl amines such as the ethylene amines, ethanol amines and ammonia; polyhydric cycloalkyl amines such as isophorodiamine; polyhydric aromatic amines such as toluene di-amine and other derivatives of aniline; phosphoric acid; Mannich condensation products; hydroxy-terminated polyacetals such as the reaction product of formaldehyde or other suitable aldehyde with a polyhydric alcohol or an alkylene oxide; polyhydric alkyl triols such as 1,2-ethanedithiol, 1,2-propanedithiol, 1,3-propanedithiol, polyhydric alkenyl thiols such as 2-butene-1,4-dithiol; polyhydric alkenyl thiols such as 3-hexyne-1,6-dithiol; and the like. For the purposes of this invention, the oxyethylene, oxypropylene, oxybutylene or oxypentylene groups introduced into the ethoxylated, alkylene oxide, polymer by the initiator (e.g., an ethylene or propylene glycol initiator or a polyalkylene polyether initiator such as polyethylene or polypropylene glycol) are considered to be polymerized alkylene oxide in determining the amounts of polymerized ethylene oxide contained by the ethoxylated alkylene oxide polymer. Preferred of the organic active hydrogen initiators are the polyhydric alkyl alcohols such as glycerol.

The specific composition, e.g., amount of polymerized ethylene oxide mers and equivalent weight, of the ethoxylated alkylene oxide polymer, affect the properties of the isocyanate-derived foams prepared therefrom, the specific polymers most advantageously employed are selected on the basis of the properties desired. In general, to obtain a foam of preferred properties, b is from 2 to 6; W is oxygen; x, y, b and z are such that the equivalent weight is from 500 to 2000. The amount of polymerized ethylene oxide mers most advantageously contained by the polymer are dependent on a variety of factors including whether the polymerized ethylene oxide mers are distributed randomly or as a block throughout the polymer. Specifically, if the ethylene oxide mers are distributed as a block capping the alkylene oxide chain, the ethylene oxide mers advantageously comprise less than thirty percent of the alkylene oxide mers, i.e., $x/(x+y)$ is less than 0.3, due to the waxy product formed at higher concentrations of ethylene oxide cap. In polymers where the polymer is not capped with a block of ethylene oxide mers, $x/(x+y)$ is preferably at least 0.4 and $y(y+x)$ is less than 0.6. Most preferably, the polymerized ethylene oxide mers are randomly distributed throughout the alkylene oxide chain, $x/(x+y)$ being at least 0.5, $y/(x+y)$ being less than 0.5, $R_1$ being $CH_3$ and $R_2$ being H or $CH_3$, b being from 2 to 4 and x, y, b and z being such that the equivalent weight of the ethoxylated alkylene oxide polymer is from 700 to 1700.

Methods of preparing the highly ethoxylated alkylene oxide polymers wherein the ethylene oxide mers form a block or are randomly distributed throughout the polymer chain are well known in the art and reference is made thereto for the purposes of this invention.

Representative active hydrogen-containing compounds useful as the other (second) active hydrogen-containing component in the practice of the present invention are those compounds useful in the preparation of isocyanate-derived foams. Such materials are well known in the art and reference is made thereto for the purposes of this invention. Illustrative examples of such active hydrogen-containing compounds are presented in U.S. Patent Nos. 3,903,346; 3,909,465; 3,919,128; 3,919,128; 3,922,238; 3,940,517 and 3,981,829, all of which are hereby incorporated by reference.

A representative example of such active hydrogen-containing compounds are the polyether polyols such as the polyoxyalkylene polyols prepared, for example, by the reaction of an active hydrogen initiator as defined hereinbefore, e.g. a polyhydric alcohol, thiol or amine, a mono- or disaccharide, and phosphoric acid with an alkylene oxide such as ethylene oxide, propylene oxide, butylene oxide, pentylene oxide, styrene oxide, a halo-substituted epoxide such as epihalohydrin, e.g. epichlorohydrin; tetrahydrofuran or an alkylene oxide adduct thereof; or mixtures thereof.

Other representative examples of active hydrogen-containing compounds useful herein include the hydroxy-terminated polyesters such as those obtained by the reaction of a polycarboxylic acid, e.g., oxalic or maleic acid, or a carboxylic acid anhydride with a polyhydric alcohol, e.g., ethylene glycol or 1,3-propylene glycol; graft polyols such as obtained by the polymerization product of a vinyl monomer in a reactive polyol medium (see, for example, U.S. Patent Nos. 3,383,351; 3,304,273 and 3,652,639); hydroxy-terminated polyacetals such as the reaction product of formaldehyde or other suitable aldehydes with a polyhydric alcohol or an alkylene oxide.

The compounds most advantageously employed as the second active hydrogen-containing component in the practice of the present invention will vary depending on the foam to be prepared and the properties desired in the resulting foam. In general, the compounds preferably employed will contain from 2 to 8, more preferably from 2 to 5, active hydrogens and possess a relatively high —OH number which is preferably greater than 100, more preferably between 150 and 900, most preferably between 200 and 800. Of such compounds, the second active hydrogen-containing component is preferably a polyalkylene polyol such as prepared by the reaction of one or more alkylene oxides with an active hydrogen-containing initiator, particularly a polyhydric aromatic alcohol or amine or a polyhydric alkyl alcohol, a mixture of two or more such polyalkylene polyols or a mixture of one or more such polyalkylene polyols with one or more other polyol.

The amount of each active hydrogen-containing component employed in the preparation of the

isocyanate derived foams is dependent on a variety of factors including the specific first active hydrogen-containing component employed, the foam to be prepared and the desired properties of said foams. For example, in many cases, the ethoxylated, alkylene oxide, polymer is blended with the other active hydrogen-containing components to improve the processability of these other components. Alternatively, in other cases, the ethoxylated alkylene oxide polymer is employed in combination with the other active hydrogen-containing component to obtain a foam having the desired balance of properties.

In general, the ethoxylated alkylene oxide polymer is conventionally employed in an amount from 5 to 95, preferably from 5 to 60, more preferably from 10 to 55, weight percent and the other active hydrogen-containing components are employed in an amount from 5 to 95, preferably from 40 to 95, more preferably from 45 to 90, weight percent, said weight percents being based on the total weight of the active hydrogen-containing components.

The isocyanurate derived foams of the present invention are prepared by admixing the active hydrogen-containing components with an isocyanate, catalyst, blowing agent, a surfactant and, optionally, fire retardant agent(s), coloring agent, plasticizer(s) or filler(s) at conditions to prepare the desired foam.

The polyisocyanates suitably employed herein are polymethylene polyphenylisocyanates having a functionality from 2.1 to 3.2, preferably from 2.5 to 3.2, and an equivalent weight from 120 to 180, more preferably from 130 to 145, such as produced by the phosgenation of a polyamine obtained by the acid catalyzed condensation research of aniline with formaldehyde. Mixtures of one or more polyisocyanates can also be employed herein. One such preferred polymethylene polyphenyl isocyanate is Voranate M 269, sold by the Dow Chemical Company.

The relative proportion of the polyisocyanate employed in the preparation of the isocyanate-derived foams will vary depending on a variety of factors including the specific polyisocyanate and active hydrogen-containing components being employed, the foam being prepared and the desired properties of said foam. In general, in the preparation of urethane-modified isocyanurate foams, the polyisocyanate is generally employed in amounts such that the foaming mixture contains from 1.2 to 5, preferably from 1.4 to 3, reactive isocyanato groups per active hydrogen-containing group, i.e. the foaming mixture contains from 120 to 500, preferably from 140 to 300, percent of the stoichiometric amount of the polyisocyanate required to completely react with the active hydrogen-containing components.

In the preparation of an urethane-modified, isocyanurate foam, a material capable of catalyzing the trimerization reaction of an isocyanate is contained in the reaction mixture. Trimerization catalysts are well known in the art and reference is made thereto for the purposes of the present invention. Representative trimerization catalysts include the quaternary ammonium compounds such as benzyl trimethylammonium hydroxide, the N-hydroxypropyl trimethyl ammonium salt of formic acid and other onium compounds; alkali metal hydroxides such as potassium hydroxide, the alkali metal alkoxides such as sodium methoxide; the alkali metal acid salts of carboxylic acids, particularly the saturated aliphatic monocarboxylic acids having from 2 to 12 carbon atoms, such as sodium acetate, potassium acetate, potassium 2-ethylhexoate, potassium adipate and sodium benzoate; various tertiary amines such as triethanolamine, triethylamine, tetramethylguanidine, 2,4,6 tris (trimethyl amiromethyl) phenol, triethylenediamine and N,N,N',N'-tetramethyl, 1,3-butanediamine; the non-basic metal salts of a carboxylic acid such as lead octate and the like. Mixtures of two or more of said trimerization catalysts or mixtures of one or more of said catalysts with a compound which is not specifically capable of catalyzing the trimerization of an isocyanate to a substantial extent can be employed. For example, although a catalyst such as a triazine derivative is capable of catalyzing both the trimerization reaction and the formation of urethane bonds by the reaction of the isocyanate with an active hydrogen-containing compound and requires no auxiliary catalyst, trimerization catalysts which are not specifically capable of catalyzing the reaction between the polyisocyanate and the active hydrogen-containing compound are preferably employed in combination with a material which catalyzes the reaction of an isocyanate with an active hydrogen-containing compound, preferably the aliphatic tertiary amines such as 1,4-diazobicyclo (2,2,2) octane and N,N-dimethylamine and the organic tin compounds are employed in combination with the trimerization catalyst. The preferred catalyst system comprises a quaternary ammonium compound, an alkali metal acid salt and a catalyst specifically capable of catalyzing the reaction of an isocyanate with an active hydrogen-containing compound. The amount of trimerization catalyst most advantageously employed herein is dependent on a variety of factors including the specific polyisocyanate employed and the effectiveness of the particular catalyst or catalyst system employed. In general, the trimerization catalyst(s) is employed in amounts from 0.5 to 8, preferably from 0.7 to 5, weight percent based on the weight percent of the active hydrogen-containing compounds. If employed, the catalyst specifically used to catalyze the reaction of the isocyanate with the active hydrogen-containing material is employed in amounts from 0.1 to 30 weight percent based on the total weight of the active hydrogen-containing compounds. In the preferred catalyst system, the quaternary ammonium is employed in an amount from 0.5 to 5, preferably from 0.7 to 3, weight percent; the alkali metal acid salt in an amount from 0.5 to 3, preferably from 0.6 to 2, weight percent and the catalyst specifically employed to catalyze the reaction of the isocyanate with the active hydrogen-containing components in an amount from 0.1 to 3 weight percent, said weight percents being based in the total weight of the active hydrogen-containing compounds.

Blowing agents useful in the preparation of isocyanate-derived foams are well known in the art and reference is made thereto for the purposes of the present invention. Suitable blowing agents include water

and other liquids or liquified gases which generate a gas by decomposition or reaction with one or more of the components in the foaming mixture (e.g., the reaction of water with an isocyanate to form $CO_2$ gas) or which vaporize at or below the conditions (i.e., temperature and pressure created by the exothermic foaming. In general, the liquids and liquified gases advantageously employed are materials having a boiling point from −80° to 100°C, preferably from 0° to 50°C. Representative blowing agents useful herein include the halogenated, preferably the chlorinated and/or the fluorinated hydrocarbons such as trichlorofluoromethane, dichlorodifluoromethane, chlorofluoro butane, monochloroethane, monochloromonofluoroethane, 1,2-dibromo-1,1,2,2-tetrafluoroethane, 1,2-dichloro-1,1,2,2-tetrafluoroethane, 1,1,2-trifluoroethane, dichloromethane, 1,1,1-trifluoro-2-fluoro-3,3-difluoro-4,4,4-trifluorobutane, hexafluorocyclobutane and octofluoro-cyclobutane, the lower molecular weight alkanes and alkenes; the lower molecular weight dialkyl ethers, e.g., acetone; and mixtures thereof. Preferred blowing agents of the halogenated alkanes, particularly the fluoronated alkanes which may also be otherwise halogenated, or a mixture of water plus a fluoronated alkane. The blowing agent is employed in an amount sufficient to give a foam of desirable density. Although such amount will vary depending on the specific components of the foaming mixture, the blowing agent will generally be employed in amounts from 1 to 50, preferably from 5 to 40, weight percent, based on the total weight of the active hydrogen-containing compound.

The reaction mixture also contains a surfactant or other cell-size control agent. Such materials are well known in the art and reference is made thereto for the purpose of the present invention. In general, representatives of such foam stabilizing surfactants are alkoxy silanes, polysilylphosphonates, polydimethylsiloxanes, the condensates of ethylene oxide with a hydrophobic base formed by condensing propylene oxide with propylene glycol, the alkyene oxide adducts of ethylene diamine, the polyoxyalkylene esters of long chain fatty acids and sorbitan, and (siloxane-oxyalkylene) block copolymers. Preferred of such materials are the siloxane-oxyalkylene block copolymers. Illustrative block copolymers are described in U.S. Patent Nos. 2,834,748; 2,917,480, 3,505,377; 3,507,815 and 3,563,924. Representative of such material copolymers is the polydimethylsiloxanepolyoxyalkylene block copolymers sold by the tradename "DC-193" by Dow Corning Corporation and L-5420 and L-5430 by Union Carbide Corporation. When employed, the foam stabilizer is generally employed in amounts from 0.05 to 5, preferably from 0.1 to 2, weight percent based on the total weight of the active hydrogen-containing compounds.

In addition to the described components, the foaming mixture can optionally, but often advantageously contain any of a variety of additives commonly employed in the preparation of rigid urethane-modified isocyanurate foams. Representative of such additives include fire-retardant agents such as tri-(2-chloroethyl) phosphate, fillers such as carbon black, barium sulfate and whiting; (calcium carbonate) dyes; pigments; anti-yellowing agents; fungicides; and plasticizers. The additives conventionally employed and their effects on the resulting foam product are well known in the art and reference is made thereto for the purpose of this invention.

In the preparation of the urethane-modified isocyanurate foams of the present invention, the ingredients comprising the reaction mixture are admixed to give a uniform blend of the ingredients and subsequently foamed. In one method for preparing the foam, each component of the reaction mixture, including the two active hydrogen components, are separately delivered to a suitable mixing device and subsequently foamed. Alternatively, in a preferred method for preparing the foam, the active hydrogen components are advantageously pre-mixed prior to their admixture with the polyisocyanate. The pre-mixture of the active hydrogen-containing compounds can also contain one or more of the other component inert to the active hydrogen-containing compounds contained by said pre-mixture. For example, inert blowing agents, as well as water, can be in the premixture. In addition, the foam stabilizing surfactant, catalyst and any auxiliary fire-retarding agents can also be incorporated within said pre-mixture. Prior to the mixture of the active hydrogen-containing components with the polyisocyanate, the blowing agent is necessarily maintained at conditions sufficient to maintain it as a uniform mixture with the active hydrogen-containing components until foaming is desired. Upon mixing of the polyisocyanate and the active hydrogen-containing component, foaming occurs. Such reaction of the isocyanate and active hydrogen-containing components and foam formation will generally occur at room temperatures, i.e., temperatures from 150 to 30°C.

The following examples are set forth to illustrate the present invention and should not be construed to limit its scope. In the examples, all parts and percentages are by weight unless otherwise indicated. The fire resistant properties are set forth for purposes of comparison only. All known synthetic polymers will burn when subject to a sufficiently intense heat source. Thus, the test results may not reflect the properties of the foam under actual fire conditions.

Example 1

An ethoxylated, glycerine initiated, alkylene oxide polymer is prepared having polymerized ethylene oxide and propylene oxide mers randomly distributed through the alkylene oxide polymer chains by reacting glycerine with a mixed feed comprising 75 percent ethylene oxide and 25 percent propylene oxide, said percents being based on the total amount of alkylene oxide in the feed. The resulting product is a triol having an equivalent weight of 1750 and an OH number of 32.

A conventional polyol for use in the preparation of rigid urethane-modified isocyanurate foams is

prepared by reacting sucrose with propylene oxide. The resulting product is a polyol having an equivalent weight of 137 and an OH number of 411.

A pre-foaming mixture is prepared by admixing 50 parts of the ethoxylated, alkylene oxide, polymer with 50 parts of the conventional, rigid polyol, 30 parts of a trichlorofluoromethane blowing agent, 1.2 parts of a silicon surfactant sold as L-5420 by Union Carbide Company, 0.25 parts of an amine catalyst and 2.5 parts of a trimerization catalyst at conditions sufficient to form a generally homogeneous mixture. Subsequently, 180 parts of a polymethylene polyphenylisocyanate sold under the tradename Voranate M-269, (registered Trade Mark of the Dow Chemical Company), is admixed with the pre-mixture. Immediately thereafter, the resulting mixture is poured into a block and allowed to rise freely.

The resulting foam had a free rise density of 41.5 kilogram per cubic meter (kg/m$^3$), a compressive strength in the direction parallel to rise of 152 kilo pascals (kPas) and in the direction perpendicular to foam rise of 88 kPas. The fire resistant properties of the foam are such that when tested by the techniques described in DIN 4102, Test Method B-2, the maximum flame height is 15 cm and the flame is extinguished in 15 seconds.

In an identical manner, a foam is prepared from (1) 45 parts of an ethoxylated alkylene oxide polymer prepared by the reaction of ethylene oxide with a propylene oxide adduct of glycerine (said polymer being comprised of a block of polymerized propylene oxide mers capped with a block of polymerized ethylene oxide mers wherein the ethylene oxide mers, comprise 15 percent of the polymerized alkylene oxide) and (2) 55 parts of a conventional sucrose initiated poly(propylene oxide). The resulting foam exhibits a compressive strength of 98 kPas in the direction parallel to rise and 56 kPas in the direction perpendicular to rise and the fire resistant properties are such that the maximum flame height is 13 cm and the flame is extinguished in 15 seconds.

The properties of these foams are superior to a foam prepared using 100 parts of the conventional sucrose initiated poly(propylene oxide) alone (no ethoxylated polymer employed) which disintegrates (falls apart as a powder) on relatively mild rubbing. As evidenced by this result, a urethane-modified isocyanurate foam can be prepared using a conventional polyol not normally useful in the preparation of such foams in combination with the ethoxylated polymer.

Example 2

A conventional polyol useful in the preparation of rigid urethane-modified, isocyanurate foams, is prepared by reacting toluene diamine with propylene oxide. The resulting polyol (Polyol A) has a hydroxyl number of 294 and an equivalent weight of 191. A second polyol conventionally employed in the preparation of rigid polyurethane foams is prepared by reacting ethylene diamine with propylene oxide. The resulting polyol (Polyol B) has a hydroxyl number of 640 and an equivalent weight of 88.

An ethoxylated, alkylene oxide, polymer is prepared by reacting glycerine with a mixed feed comprising 10 percent of ethylene oxide and 90 percent of propylene oxide. The resulting polymer has a hydroxyl number of 48 and comprises polymerized ethylene and propylene oxide mers randomly distributed throughout the alkylene oxide polymer chain.

A pre-foaming mixture is prepared by admixing, at conditions sufficient to form a uniform mixture, 52.5 parts of Polyol A, 17.5 parts of Polyol B, 1 part of a poly(alkyl siloxane-oxyalkylene) foam stabilizer, 1.6 parts of trichlorofluoromethane blowing agent, 12.5 parts of a tris-(B-chloroethyl) phosphate (an auxiliary fire-retarding agent) and 12.5 parts of the ethoxylated alkylene oxide polymer. A rigid polyurethane (Sample No. 1) is subsequently prepared by admixing 100 parts of the pre-mixture with 160 parts of polymethylene di(phenyl isocyanate) commonly referred to as MDI, pouring the resulting mixture into a block and allowing the reaction mixture to rise freely.

Various other rigid, urethane-modified isocyanurate foams (Samples 2—5) are prepared in an identical manner except using ethoxylated alkylene oxide polymers having a hydroxyl number of 33 and the various percentages of polymerized ethylene oxide mers as specified in Table I randomly distributed throughout the alkylene oxide polymer chain. In addition, a rigid-polyurethane foam according to the invention (Sample No. 6) is prepared using the reaction product of water with a mixed feed of 70 percent ethylene oxide and 30 percent propylene oxide as the ethoxylated alkylene oxide polymer.

For purposes of comparison, a rigid polyurethane foam (Sample No. C) is prepared which is identical to Sample No. 1 except that the pre-mixture employed in its preparation contains no ethoxylated alkylene oxide polymer.

The cream time, gel time and tack free time experienced in the preparation of each foam is measured as well as the compressive strength and fire resistance of the resulting foam. The results of this testing are recorded in Table I.

TABLE I

| Sample No. | Ethoxylated polymer[1] Type | Initiator | EO content, % | Foam preparation[2] Cream time, sec. | Gel time, sec. | Tack free time, sec. | Foam properties Compressive strength, kPa[3] | Fire resistance, cm[4] | Density kg/m$^3$[5] |
|---|---|---|---|---|---|---|---|---|---|
| C* | — | — | — | 15 | 40 | 50 | 1,3 | 18 | 32,5 |
| 1 | Random | Glycerine | 10 | 30 | 62 | 73 | 1,45 | 13 | 32,8 |
| 2 | Random | Glycerine | 30 | 26 | 51 | 62 | 1,55 | 12 | 32,2 |
| 3 | Random | Glycerine | 50 | 25 | 50 | 59 | 1,70 | 12 | 32,2 |
| 4 | Random | Glycerine | 70 | 22 | 44 | 54 | 1,97 | 12 | 32,8 |
| 5 | Random | Glycerine | 90 | 21 | 40 | 50 | 1,81 | 12 | 31,3 |
| 6 | Random | $H_2O$ | 70 | 24 | 43 | 50 | 2,30 | 12 | 34,7 |

* Not an example of the present invention.

[1] The ethoxylated polymer is characterized by its type wherein Random means that the ethylene oxide and propylene oxide are randomly polymerized throughout the alkylene oxide polymer chain and cap means the polymer comprises a block of polymerized propylene oxide mers capped with a block of polymerized ethylene oxide mers, Initiator refers to the compound used in initiating polymerization and Content refers to the weight percent of polymerized ethylene oxide mers in the alkylene oxide polymer chain based on the total weight of polymerized ethylene and propylene in the polymer.

[2] In the foam preparation, the cream time is the time following initiation of mixing when the reaction mixture turns creamy (i.e., achieves a white appearance, gel time is measured by moving a tongue depressor up and down in the rising foam and is recorded as that time when the first strings are created by the tongue depressor and tack free time is the time mixture at which the foam surface is sufficiently cured so that it does not adhere to a new tongue depressor.

[3] The compressive strength is determined by techniques of ASTM test method designated D-1621-3.

[4] The fire resistant properties are determined using techniques of DIN test method designated DIN 4102.

[5] Density of the foam is determined using techniques described in ASTM test method designated D-1622-63.

As evidenced by the data recorded in Table I, the foam prepared from the combination of the polyols prepared using an amine initiator with the ethoxylated alkylene oxide polymer exhibits a superior balance of compressive strength and fire resistant properties than a foam prepared without the ethoxylated alkylene oxide polymer. Moreover, as the amount of polymerized ethylene oxide mers in the alkylene oxide polymer increases, the foam properties, particularly, the compressive strength, shows further improvement with substantial compressive strength improvement occurring as the ethylene oxide content of 30 percent is obtained.

Example 3

A rigid urethane modified polyisocyanurate foam (Sample No. 1) is prepared as in Example 2 except that the ethoxylated polymer is the reaction product of a propylene oxide adduct of glycerine with ethylene oxide. The polymer is a propylene oxide adduct of glycerine "capped" with 14 percent polymerized ethylene oxide based on the weight of polymerized ethylene and propylene oxide mers and has a hydroxyl number of 36. Additional foams (samples 2—5) are prepared using other ethylene oxide "capped" polymers containing the various amounts of polymerized ethylene oxide specified in Table II. The cream time, gel time and tack free time is measured during foam preparation. In addition, the compressive strength and fire resistance of the resulting foams are measured. These results are set forth in Table II. For purposes of comparison, the cream time, gel time and tack free time as well as the compressive strength and fire retardant properties of an identical foam except prepared using no ethoxylated alkylene oxide polymer are set forth in Table II.

As evidenced by the data recorded in Table II, the balance of compressive strength and fire retardant properties are superior for the foams prepared using an ethoxylated alkylene oxide polymer as one of the active hydrogen-containing components. As the amounts of ethylene oxide cap increases, the foam's compressive strength also increases. Dramatic compressive strength increases are noted when the polymerized ethylene oxide comprises 20 percent or more of the polymerized alkylene oxide. Ethoxylated polymers comprising greater than 30 percent ethylene oxide cap are not employed since they are undesirably waxy which results in reduced processability.

TABLE II

| Sample No. | Ethoxylated polymer[1] Type | Initiator | EO content, % | Foam preparation[2] Cream time, sec. | Gel time, sec. | Tack free time, sec. | Foam properties Compressive strength, KPa[3] | Fire resistance, cm[4] | Density kg/m$^3$[5] |
|---|---|---|---|---|---|---|---|---|---|
| C* | | | | 15 | 40 | 50 | 1,3 | 18 | 32.5 |
| 1 | Cap | Glycerine | 14 | 28 | 60 | 72 | 1.33 | 14 | 31.3 |
| 2 | Cap | Glycerine | 17 | 28 | 54 | 66 | 1.28 | 14 | 31.6 |
| 3 | Cap | Glycerine | 20 | 26 | 49 | 59 | 1.51 | 13 | 32.5 |
| 4 | Cap | Glycerine | 25 | 23 | 51 | 61 | 1.52 | 13 | 32.2 |
| 5 | Cap | Glycerine | 30 | 27 | 56 | 69 | 1.46 | 13 | 31.3 |

* Not an example of the present invention.
(1) Same as Note 1 in Table I
(2) Same as Note 2 in Table I
(3) Same as Note 3 in Table I
(4) Same as Note 4 in Table I
(5) Same as Note 5 in Table I

Example 4

A polyol is prepared by reacting a blend of sugar and glycerine with propylene oxide. The resulting polymer has a hydroxy number of 410. A pre-mixture useful in the preparation of rigid urethane modified polyisocyanurate foam is prepared by admixing 50 parts of this polyol with 50 parts of an ethoxylated alkylene oxide polymer identical to that employed in the preparation of Sample No. 1 of Example 2, 1.2 parts of a foam stabilizer, 0.85 parts of potassium acetate, 1 part of water and 32 parts of trichlorofluormethane. A urethane-modified isocyanurate foam is then prepared by blending this pre-mixture (144 parts) with 180 parts of MDI, placing the resulting foam mixture in a block and allowing the mixture to foam. Other foams (Sample Nos. 2—5) are prepared in an identical manner except using ethoxylated polymers comprised of the various amounts of ethylene oxide specified in Table III. In addition, a foam (Sample No. 6) is prepared in an identical manner except using a water-initiated ethoxylated polymer comprised of 30 percent ethylene oxide and 70 percent propylene oxide randomly polymerized throughout the polymer chain as the ethoxylated alkylene oxide polymer. Yet another foam (Sample No. 7) is prepared using a water-initiated polymer prepared from 70 percent ethylene oxide and 30 percent propylene oxide as the ethoxylated polymer component. The cream time, rise time and gel free time exhibited during the preparation and the compressive strength and fire retardant properties of each foam, as well as of an identical foam (Sample No. C) except prepared using only the sugar/glycerine initiated propylene oxide (no ethoxylated polymer employed) are measured and recorded in Table III.

TABLE III

| Sample No. | Ethoxylated polymer[1] Type | Initiator | EO content, % | Foam preparation[2] Cream time, sec. | Gel time, sec. | Tack free time, sec. | Foam properties Compressive strength, KPa[3] | Fire resistance cm[4] | Density kg/cm3[5] |
|---|---|---|---|---|---|---|---|---|---|
| C* | | | | 80 | 250 | 350 | 70 | 20 | |
| 1 | Random | Glycerine | 10 | 60 | 200 | 290 | 110 | 18 | 34.8 |
| 2 | Random | Glycerine | 30 | 50 | 155 | 210 | 152 | 17 | 34.3 |
| 3 | Random | Glycerine | 50 | 45 | 155 | 220 | 178 | 17 | 33.3 |
| 4 | Random | Glycerine | 70 | 40 | 185 | 300 | 181 | 16 | 33.3 |
| 5 | Random | Glycerine | 90 | 40 | 200 | 350 | 177 | 16 | 32.8 |
| 6 | Random | $H_2O$ | 30 | 45 | 145 | 195 | 177 | 16 | 32.9 |
| 7 | Random | $H_2O$ | 70 | 40 | 195 | 320 | 176 | 18 | 33.6 |

* Not an example of the present invention
[1] Sample as Note 1 in Table I
[2] Sample as Note 2 in Table I
[3] Sample as Note 3 in Table I
[4] Sample as Note 4 in Table I
[5] Sample as Note 5 in Table I

As evidenced by the data in Table III, the foams prepared from a combination of (1) the ethoxylated polymer having varying amounts of ethylene oxide randomly polymerized throughout the alkylene oxide polymer chain and (2) the glycerine/sucrose initiated polypropylene polyol exhibit excellent compressive strength and fire retardant properties as compared to foams prepared solely from the sugar/glycerine initiated polypropylene glycol. Increases in compressive strength are generally evidenced with increasing amounts of ethylene oxide, with a significant increase in compressive strength experienced when the ethoxylated polymer contains 30 percent ethylene oxide based on the total weight of the polymerized alkylene oxide in the polymer. In addition, with increasing amounts of ethylene oxide in the ethoxylated polymer, coincident improvement in the fire retardant properties are also exhibited. Foams prepared from the water-initiated ethoxylated polymers exhibit essentially equivalent properties to the foams prepared from the glycerine-initiated ethoxylated polymer.

Example 5

Several urethane-modified, isocyanurate foams (Sample Nos. 1 and 2) are prepared in accordance with this invention in a manner identical to Example No. 4 except that a propylene oxide adduct of glycerine capped with the various amounts of a polymerized ethylene oxide specified in Table IV are employed as the ethoxylated alkylene oxide polymer.

For purposes of comparison, a foam (Sample No. C) is prepared using a propylene oxide adduct of glycerine capped with only 8 percent of polymerized ethylene oxide mers.

The cream time, gel time and tack free time exhibited during foam preparation and the density, compressive strength and fire retardant properties of the foam are measured and set forth in Table IV.

TABLE IV

| Sample No. | Ethoxylated polymer[1] Type | Initiator | EO content, % | Foam preparation[2] Cream time, sec. | Gel time, sec. | Tack free time, sec. | Foam properties Compressive strength, KPa[3] | Fire resistance cm[4] | Density kg/m$^3$[5] |
|---|---|---|---|---|---|---|---|---|---|
| C* | Cap | Glycerine | 8 | 60 | 205 | 320 | 117 | 20 | 34.9 |
| 1 | Cap | Glycerine | 14 | 55 | 205 | 300 | 140 | 18 | 34.2 |
| 2 | Cap | Glycerine | 30 | 35 | 160 | 265 | 172 | 18 | 34.0 |

* Not an example of the present invention.
[1] Same as Note 1 in Table I
[2] Same as Note 2 in Table I
[3] Same as Note 3 in Table I
[4] Same as Note 4 in Table I
[5] Same as Note 5 in Table I

As evidenced by the data presented in Table IV, the compressive strength of the foam increases significantly as the percent ethylene oxide cap increases from 8 to 14 percent. Yet further strength increases are experienced when the percent ethylene oxide cap is increased to 30 percent. In addition, with increasing amounts of ethylene oxide cap, the fire retardant properties are also improved.

Example 6

A commercially available dihydric alcohol having an OH number of 315, sold as Dow Resin 565 by The Dow Chemical Company, and prepared by reacting one molecule of bisphenol A with two molecules of propylene oxide has a viscosity at 25°C of over 25000 centipoise (cps). Due to this high viscosity, it is not readily usable in the preparation of isocyanate-derived foams.

To reduce the viscosity of this dihydric alcohol, 70 parts thereof are blended with 30 parts of an ethoxylated, alkylene oxide, polymer, prepared by the reaction of glycerine with a mixed feed of 70 percent ethylene oxide and 30 percent propylene oxide. The resulting mixture has a viscosity of only 13,900 cps at 25°C, a sufficiently low viscosity to make the combination more easily processable. The resulting combination (100 parts) is blended with 1 part water, 22 parts of a fluorocarbon blowing agent, 1.5 parts of a foam stabilizing surfactant, 0.3 parts of a tertiary amine catalyst and 2.5 parts of a quaternary ammonium trimerization catalyst to form a premix formulation.

The pre-mix formulation is blended with 180 parts of MDI and subsequently foamed. During foam formation, a cream time of 40 seconds, a gel time of 110 seconds and a tack free time of 130 seconds is observed. The resulting foam (Foam A) has a density of 34.1 kg/m$^3$, an excellent compressive strength of 236 kPas and fire resistant properties such that the flame height reaches 11 cm when tested according to DIN 4102, Method B-2.

To prepare a composition having a further reduced viscosity, 52.5 parts of the Dow Resin 565 is mixed with 17.5 parts of the ethoxylated, alkylene oxide polymer employed in the preparation of Foam A, 17.5 parts of the active hydrogen-containing compound identical to Polyol B in Example II and 12.5 parts of tris (B-chloroethyl) phosphate. The resulting mixture has a viscosity of only 8000 cps at 25°C. A pre-mix formulation is prepared by mixing this combination (100 parts) with 1 part of a foam stabilizing surfactant, 1.6 parts of a quaternary ammonium trimerization catalyst and 0.8 parts of potassium octoate. The pre-mix formulation is then mixed with 180 parts of MDI and foamed. The resulting foam (Foam B) has a density of 33.1 kg/m$^3$, an excellent compressive strength of 187 kPas and fire resistant properties such that the flame height reaches 11 cm when tested according to DIN 4102, Method B-2.

As evidenced by this Example, the processability of a polyol having an undesirably high viscosity can be improved by employing it in combination with an ethoxylated, alkylene oxide, polymer, to prepare foams of excellent properties.

**Claims**

1. A method for preparing a rigid, urethane-modified, isocyanurate foam by mixing a polyisocyanate with at least two different active hydrogen-containing compounds in the presence of a blowing agent, catalyst and a foam stabilizing surfactant characterized in that the polyisocyanate component comprises one or more polymethylene polyphenylisocyanates each having a functionality from 2.1 to 3.2 and an isocyanate equivalent weight of from 120 to 180, with at least two active hydrogen containing compounds, one of the hydrogen containing compounds is an alkylene oxide polymer having a hydroxyl number from 20 to 200 and from 2 to 8 active hydrogens, said alkylene oxide polymers being composed of at least 10

weight percent, based on the total weight of polymerized alkylene oxide in the polymer, of polymerized ethylene oxide and the second of said active hydrogen-containing compounds is a polyether polyol, a hydroxy terminated polyester, a graft polyol, a hydroxy terminated polyacetal or a mixture thereof.

2. The method of Claim 1 characterized in that the ethoxylated alkylene oxide polymer has from 2 to 8 active hydrogens and a hydroxyl number from 20 to 110.

3. The method of Claim 2 characterized in that the ethoxylated, alkylene oxide, polymer comprises at least 30 weight percent, based on the total weight of the polymerized alkylene oxide, of polymerized ethylene oxide mers.

4. The method of Claim 4 characterized in that the ethoxylated, alkylene oxide, polymer comprises at least 50 weight percent, based on the total weight of the polymerized alkylene oxide, of polymerized ethylene oxide mers randomly distributed throughout the polymer chain.

5. The method of Claim 1 characterized in that the ethoxylated alkylene oxide polymers are represented by the formula:

$$X{-}[{-}(C_2H_4O{-})_x{-}(\underset{\displaystyle R_1}{\underset{|}{CH_2CH}}\ O{-})_y{-}]_b{-}(\underset{\displaystyle R_2}{\underset{|}{CH_2CH}}{-}W{-})_zH$$

wherein X is the residue of an organic active hydrogen-containing initiator, x is the summation of the ethylene oxide mers, distributed randomly and/or as a block through the alkylene oxide polymer chain; y is the summation of the propylene, butylene and/or pentylene oxide mers distributed randomly and/or as a block through the alkylene oxide polymer chain; $x/(x+y)$ is at least 0.1; $y/(x+y)$ is less than 0.9; $R_1$ is $CH_3$, $C_2H_5$, or $C_3H_7$; $R_2$ is H, $CH_3$, $C_2H_5$ or $C_3H_7$; W is O, S or NH; b is from 2 to 8; and x, y, b and z are such that the equivalent weight of the polymer is from 300 to 2500.

6. The method of Claim 5 characterized in that b is from 2 to 6, W is oxygen, and x, y, z and b are such that the equivalent weight is from 500 to 20000.

7. The method of Claim 6 characterized in that the polymerized oxide mers are randomly distributed throughout the alkylene oxide chain, b is from 2 to 4, $R_1$ is $CH_3$, $R_2$ is H or $CH_3$, $x/(x-Y)$ is at least 0.4, $y/(x+y)$ is less than 0.6 and x, y, z and b are such that the equivalent weight of the ethoxylated alkylene oxide polymer is from 700 to 1700.

8. The method of Claim 7 is characterized in that the second active hydrogen containing compound is a polyoxyalkylene polyol having an OH number from 200 to 800 and from 2 to 8 active hydrogens.

9. The method of Claim 8 characterized in that isocyanate is employed in amounts sufficient to provide 1.2 to 5 reactive isocyanato groups for each active hydrogen-containing group.

10. A rigid, urethane modified isocyanurate foam comprising the reaction product of a polyisocyanate component and at least two active hydrogen containing compounds characterized in that the polyisocyanate component comprises one or more polymethylene polyphenylisocyanate each having a functionality from 2.1 to 3.2 and an isocyanate equivalent weight of from 120 to 180, one of the hydrogen containing compounds in an alkylene oxide polymer having a hydroxyl number from 20 to 200 and from 2 to 8 active hydrogens, said alkylene oxide polymer being composed of at least 10 weight percent, based on the total weight of the polymerized alkylene oxide in the polymer, of polymerized ethylene oxide and the second of said active hydrogen-containing compounds is a polyether polyol, a hydroxy terminated polyester, a graft polyol, a hydroxy-terminated polyacetal or a mixture thereof.

11. The foam of Claim 10 characterized in that the ethoxylated alkylene oxide polymer has from 2 to 8 active hydrogen-containing groups and a hydroxyl number from 20 to 110 and comprises at least 30 weight percent, based on the total weight of the polymerized alkylene oxide, of polymerized ethylene oxide mers.

12. The foam of Claim 11 characterized in that the ethoxylated, alkylene oxide, polymers are represented by the formula:

$$X{-}[{-}((CH_4O{-})_x{-}(\underset{\displaystyle R_1}{\underset{|}{CH_2CH}}\ O{-})_y{-}]_b{-}(\underset{\displaystyle R_2}{\underset{|}{CH_2CH}}{-}W{-})_zH$$

wherein X is the residue of an organic active hydrogen-containing initiator, x is the summation of the ethylene oxide mers, distributed randomly and/or as a block through the alkylene oxide polymer chain; Y is the summation of the propylene, butylene and/or pentylene oxide mers distributed randomly and/or as a block through the alkylene oxide polymer chain; $x/(x+Y)$ is at least 0.1; $y(x+y)$ is less than 0.9; $R_1$ is $CH_3$; $C_2H_5$ or $C_3H_7$; $R_2$ is H, $CH_3$, $C_2H_5$; W=O, S or NH, b is from 2 to 8 and x, y, z and b are such that the equivalent weight of the polymer is from 300 to 2500.

13. The foam of Claim 12 characterized in that the second of the active hydrogen containing compounds comprises a polyoxyalkylene polyol prepared by the reaction of a polyhydric alcohol, or a mono- or disaccharide with ethylene oxide, propylene oxide, butylene oxide, pentylene oxide, styrene oxide, a halo-substituted epoxide, tetra hydrofuran or an alkylene oxide adduct thereof.

**Patentansprüche**

1. Verfahren zur Herstellung eines starren, urethan-modifizierten Isocyanurat-Schaumstoffes durch Mischen eines Polyisocyanates mit mindestens zwei verschiedenen aktiven Wasserstoff enthaltenden Verbindungen in Gegenwart eines Treibmittels, Katalysators und eines schaumstabilisierenden oberflächenaktiven Mittels, dadurch gekennzeichnet, daß die Polyisocyanat-Komponente ein oder mehrere Polymethylen-Polyphenylisocyanate umfaßt, von denen jedes eine Funktionalität von 2,1 bis 3,2 besitzt und ein Isocyanatäquivalentgewicht von 120 bis 180, eine der Wasserstoff enthaltenden Verbindungen ein Alkylenoxidpolymer mit einer Hydroxylzahl von 20 bis 200 und 2 bis 8 aktiven Wasserstoffatomen ist, wobei die Alkylenoxid-Polymeren aus mindestens 10 Gew.-%, bezogen auf das Gesamtgewicht des polymerisierten Alkylenoxids im Polymer, polymerisiertem Ethylenoxid zusammengesetzt sind und die zweite der aktiven Wasserstoff enthaltenden Verbindungen ein Polyetherpolyol, ein Hydroxyterminierter Polyester, ein Pfropfpolyol, ein Hydroxy-terminiertes Polyacetal oder eine Mischung davon ist.

2. Verfahren nach Anspruch 1, dadurch gekennzeichnet, daß das ethoxylierte Alkenoxid-Polymer 2 bis 8 aktive Wasserstoffatome und eine Hydroxylzahl von 20 bis 110 besitzt.

3. Verfahren nach Anspruch 2, dadurch gekennzeichnet, daß das ethoxylierte Alkylenoxid-Polymer mindestens 30 Gew.-%, bezogen auf das Gesamtgewicht des polymerisierten Alkylenoxids, polymerisierte Ethylenoxid-mere umfaßt.

4. Verfahren nach Anspruch 3, dadurch gekennzeichnet, daß das ethoxylierte Alkylenoxid-Polymer mindestens 50 Gew.-%, bezogen auf das Gesamtgewicht des polymerisierten Alkylenoxids, polymerisierte Ethylenoxid-mere statistisch über die Polymerkette verteilt enthält.

5. Verfahren nach Anspruch 1, dadurch gekennzeichnet, daß die ethoxylierten Alkylenoxid-Polymere durch die Formel dargestellt werden:

$$X\text{-}[(C_2H_4O)_x(CH_2\underset{\displaystyle R_1}{\underset{|}{CH}}\ O)_y]_b(CH_2\text{—}\underset{\displaystyle R_2}{\underset{|}{CH}}\text{—}W)_zH$$

worin X der Rest eines organischen aktiven Wasserstoff enthaltenden Initiators ist, x die Summe der Ethylenoxid-meren ist, die statistisch und/oder als Block über die Alyklenoxid-Polymerkette verteilt sind; y die Summe der Propylen-, Butylen- und/oder Pentylenoxid-meren ist, die statistisch und/oder als Block über die Alylenoxid-Polymerkette verteilt sind; $x/(x+y)$ mindestens 0,1 ist, $y/(x+y)$ weniger als 0,9 ist; $R_1$ $CH_3$, $C_2H_5$ oder $C_3H_7$ ist; $R_2$ H, $CH_3$, $C_2H_5$ oder $C_3H_7$ ist; W, O, S oder NH ist; b 2 bis 8 ist; und x, y, b und z solche Werte besitzen, daß das Äquivalentgewicht des Polymers 300 bis 2500 ist.

6. Verfahren nach Anspruch 5, dadurch gekennzeichnet, daß b 2 bis 6 ist, W Sauerstoff ist und x, y, z und b solche Werte besitzen, daß das Äquivalentgewicht 500 bis 20000 beträgt.

7. Verfahren nach Anspruch 6, dadurch gekennzeichnet, daß die polymerisierten Oxid-meren statistisch über die Alkylenoxid-Kette verteilt sind, b 2 bis 4 ist, $R_1$ $CH_3$ ist, $R_2$ H oder $CH_3$ ist, $x/(x+y)$ mindestens 0,4 ist, $y/(x+y)$ weniger als 0,6 ist und x, y, z und b solche Werte besitzen, daß das Äquivalentgewicht des ethoxylierten Alkylenoxid-Polymers 700 bis 1700 ist.

8. Verfahren nach Anspruch 7, dadurch gekennzeichnet, daß die zweite aktiven Wasserstoff enthaltende Verbindung ein Polyoxyalkylenpolyol mit einer OH-Zahl von 200 bis 800 und mit 2 bis 8 aktiven Wasserstoffatomen ist.

9. Verfahren nach Anspruch 8, dadurch gekennzeichnet, daß das Isocyanat in Mengen verwendet wird, die ausreichen, um 1,2 bis 5 reaktive Isocyanat-Gruppen für jede aktiven Wasserstoff enthaltende Gruppe bereitzustellen.

10. Starrer, urethanmodifizierter Isocyanurat-Schaumstoff, umfassend das Reaktionsprodukt einer Polyisocyanat-Komponente und mindestens zweier aktiven Wasserstoff enthaltenden Verbindungen, dadurch gekennzeichnet, daß die Polyisocyanat-Komponente ein oder mehrere Polymethylen-Polyphenylisocyanate umfaßt, von denen jedes eine Funktionalität von 2,1 bis 3,2 besitzt und ein Isocyanat-Äquivalentgewicht von 120 bis 180, eine der Wasserstoff enthaltenden Verbindungen ein Alkylenoxid-Polymer mit einer Hydroxylzahl von 20 bis 200 und 2 bis 8 aktiven Wasserstoffatomen ist, wobei das Alkylenoxid-Polymere aus mindestens 10 Gew.-% bezogen auf das Gesamtgewicht des polymerisierten Alkylenoxids in dem Polymeren, polymerisiertem Ethylenoxid zusammengesetzt ist und die zweite der aktiven Wasserstoff enthaltenden Verbindungen ein Polyetherpolyol, ein Hydroxyterminierter Polyester, ein Pfropfpolyol, ein Hydroxy-terminiertes Polyacetal oder eine Mischung davon ist.

11. Schaumstoff nach Anspruch 10, dadurch gekennzeichnet, daß das ethoxylierte Alkylenoxid-Polymer 2 bis 8 aktiven Wasserstoff enthaltende Gruppen und eine Hydroxylzahl von 20 bis 110 besitzt und mindestens 30 Gew.-%, bezogen auf das Gesamtgewicht des polymerisierten Alkylenoxids, polymerisierte Ethylenoxid-mere umfaßt.

12. Schaumstoff nach Anspruch 11, dadurch gekennzeichnet, daß die ethoxylierten Alkylenoxidpolymere durch die Formel dargestellt werden:

$$X\text{-}[(C_2H_4O)_x(CH_2\underset{\displaystyle R_1}{\underset{|}{CH}}\ O)_y]_b(CH_2\text{—}\underset{\displaystyle R_2}{\underset{|}{CH}}\text{—}W)_zH$$

worin X der Rest eines organischen aktiven Wasserstoff enthaltenden Initiators ist, x die Summe der Ethylenoxid-meren ist, die statistisch und/oder als Block über die Alkylenoxid-Polymerkette verteilt sind; y die Summe der Propylen-, Butylen und/oder Pentylenoxid-meren ist, die statistisch und/oder als Block über die Alkylenoxid-Polymerkette verteilt sind, x/(x+y) mindestens 0,1 ist; y/(x+y) weniger als 0,9 ist; $R_1$ $CH_3$, $C_2H_5$ oder $C_3H_7$ ist; $R_2$ H, $CH_3$, $C_2H_5$ ist; W O, S oder NH ist, b 2 bis 8 ist und x, y, z und b solche Werte besitzen, daß das Äquivalentgewicht des Polymers 300 bis 2500 ist.

13. Schaumstoff nach Anspruch 12, dadurch gekennzeichnet, daß die zweite der aktiven Wasserstoff enthaltenden Verbindungen ein Polyoxyalkylenpolyol umfaßt, das durch Umsetzung eines Polyhydric-Alkohols oder eines Mono- oder Disaccharids mit Ethylenoxid, Propylenoxid, Butylenoxid, Pentylenoxid, Styroloxid, einem halogensubstituierten Epoxid, Tetrahydrofuran oder einem Alkylenoxidaddukt davon hergestellt ist.

**Revendications**

1. Procédé pour la préparation d'une mousse rigide d'isocyanurate, modifiée par de l'uréthane, par mélange d'un polyisocyanate avec au moins deux composés différents comprenant de l'hydrogène actif, en présence d'un agent porogène, d'un catalyseur et d'un agent tensioactif stabilisateur de mousse, caractérisé en ce que le constituant polyisocyanate comprend un ou plusieurs polyméthylène- polyphénylisocyanates ayant chacun une fonctionnalité de 2,1 à 3,2 et un poids d'équivalent isocyanate allant de 120 à 180, et en ce qu'un des composés contenant de l'hydrogène est une polymère d'oxyde d'alkylène ayant un indice d'hydroxyle allant de 20 à 200 et ayant de 2 à 8 hydrogènes actifs, lesdits polymères d'oxyde d'alkylène comprenant au moins 10 pour cent en poids, par rapport au poids total d'oxyde d'alkylène polymérisé dans le polymère, d'oxyde d'éthylène polymérisé, et le second desdits composés contenant de l'hydrogène actif est un polyéther- polyol, un polyester à terminaisons hydroxyles, un polyol greffé, un polacétal à terminaisons hydroxyles ou un de leurs mélanges.

2. Procédé selon la revendication 1, caractérisé en ce que le polymère d'oxyde d'alkylène, éthoxylé, a de 2 à 8 hydrogènes actifs et un indice d'hydroxyle allant de 20 à 110.

3. Procédé selon la revendication 2, caractérisé en ce que le polymère d'oxyde d'alkylène éthoxylé, comprend au moins 30 pour cent en poids, par rapport au poids total d'oxyde d'alkylène polymérisé, de motifs oxyde d'éthylène polymérisés.

4. Procédé selon la revendication 3, caractérisé en ce que le polymère d'oxyde d'alkylène, éthoxylé, comprend au moins 50 pour cent en poids, par rapport au poids total d'oxyde d'alkylène polymérisé, de motifs oxyde d'éthylène polymérisés distribués de manière aléatoire dans la chaîne polymère.

5. Procédé selon la revendication 1, caractérisé en ce que les polymères d'oxyde d'alkylène, éthoxylés, sont représentés par la formule:

$$X\text{-}[\text{-}(\text{-}C_2H_4O\text{-})_x\text{-}(\text{-}CH_2\underset{\displaystyle R_1}{\underset{|}{C}}H\ O\text{-})_y\text{-}]_b\text{-}(\text{-}CH_2\underset{\displaystyle R_2}{\underset{|}{C}}H\text{—}W\text{-})_zH$$

dans laquelle X est le résidu d'un amorceur organique contenant de l'hydrogène actif, x est la somme des motifs oxyde d'éthylène, distribués de manière aléatoire et/ou sous forme d'une séquence dans la chaîne du polymère d'oxyde d'alkylène; y est la somme des motifs oxyde de propylène, de butylène et/ou de pentylène, distribués de manière aléatoire et/ou sous la forme d'une séquence dans la chaîne de polymère d'oxyde d'alkylène; x/(x+y) vaut au moins 0,1; y/(x+y) vaut moins de 0,9; $R_1$ est $CH_3$, $C_2H_5$, ou $C_3H_7$; $R_2$ est H, $CH_3$ $C_2H_5$ ou $C_3H_7$; W est O, S ou NH; b va de 2 à 8; et x, y, b et z sont tels que le poids d'équivalent du polymère va de 300 à 2500.

6. Procédé selon la revendication 5, caractérisé en ce que b va de 2 à 6, W est l'oxygène, et x, y, z et b sont tels que le poids d'équivalent va de 500 à 2000.

7. Procédé selon la revendication 6, caractérisé en ce que les motifs oxyde polymérisés ont une distribution aléatoire dans la chaîne d'oxyde d'alkylène, b va de 2 à 4, $R_1$ est $CH_3$, $R_2$ est H ou $CH_3$, x/(x+y) vaut au moins 0,4, y/(x+y) vaut moins de 0,6 et x, y, z et b sont tels que le poids d'équivalent du polymère d'oxyde d'alkylène éthoxylé, va de 700 à 1700.

8. Procédé selon la revendication 7, caractérisé en ce que le second composé contenant de l'hydrogène actif est un polyoxyalkylène-polyol ayant un indice d'OH allant de 200 à 800 et de 2 à 8 hydrogènes actifs.

9. Procédé selon la revendication 8, caractérisé en ce que l'on utilise l'isocyanate en des quantités suffisantes pour fournir 1,2 à 5 groupes réactifs isocyanato pour chaque groupe contenant de l'hydrogène actif.

10. Mousse rigide d'isocyanurate modifiée par de l'uréthane, comprenant le produit de réaction d'un constituant polyisocyanate et d'au moins deux composés contenant de l'hydrogène actif, caractérisée en ce que le constituant polyisocyanate comprend un ou plusieurs polyméthylène-polyphénylisocyanates ayant chacun une fonctionnalité allant de 2,1 à 3,2 et un poids d'équivalent isocyanate allant de 120 à 180, en ce qu'un des composés contenant de l'hydrogène dans un polymère d'oxyde d'alkylène a un indice d'hydroxyle compris entre 20 et 200 et de 2 à 8 hydrogènes actifs, ledit polymère d'oxyde d'alkylène comprenant au moins 10 pour cent en poids, par rapport au poids total d'oxyde d'alkylène polymérisé dans

le polymère, d'oxyde d'éthylène polymérisé, et en ce que le second desdits composés contenant de l'hydrogène actif est un polyéther-polyol, un polyester à terminaisons hydroxyles, un polyol greffé, un polyacétal, à terminaisons hydroxyles ou un de leurs mélanges.

11. Mousse selon la revendication 10, caractérisée en ce que le polymère d'oxyde d'alkylène, éthoxylé, a de 2 à 8 groupes contenant de l'hydrogène actif et un indice d'hydroxyle compris entre 20 et 110, et comprend au moins 30 pour cent en poids, par rapport au poids total d'oxyde d'alkylène polymérisé, de motifs oxyde d'éthylène polymérisés.

12. Mousse selon la revendication 11, caractérisée en ce que les polymères d'oxyde d'alkylène, éthoxylés, sont représentés par la formule:

$$X-[-(C_2H_4O)_x-(CH_2\underset{R_1}{\underset{|}{CH}}O)_y-]_b-(CH_2\underset{R_2}{\underset{|}{CH}}-W)_zH$$

dans laquelle X est le résidu d'un amorceur organique contenant de l'hydrogène actif, x est la somme des motifs oxyde d'éthylène, distribués de manière aléatoire et/ou sous la forme d'une séquence dans la chaîne de polymère d'oxyde d'alkylène, y est la somme des motifs oxyde de propylène, de butylène et/ou de pentylène distribués de manière aléatoire et/ou sous forme d'une séquence dans la chaîne de polymère d'oxyde d'alkylène; $x/(x+y)$ vaut au moins 0,1; $y/(x+y)$ vaut moins de 0,9; $R_1$ est $CH_3$, $C_2H_5$ ou $C_3H_7$; $R_2$ est H, $CH_3$, $C_2H_5$; W=0, S ou NH; b va de 2 à 8 et x, y, z et b sont tels que le poids d'equivalent du polymère est compris dans l'intervalle allant de 300 à 2500.

13. Mousse selon la revendication 12, caractérisée en ce le second des composés contenant de l'hydrogène actif englobe un polyoxyalkylène-polyol préparé par la réaction d'un alcool polyhydroxylé ou d'un mono- ou di- saccharide avec l'oxyde d'éthylène, l'oxyde de propylène, l'oxyde de butylène, l'oxyde de pentylène, l'oxyde de styrène, un époxyde à substituant(s) halogéné(s), le tétrahydrofuranne ou un de leurs produits d'addition d'oxyde d'alkylène.